# EUROPEAN PATENT APPLICATION

(11) **EP 4 614 652 A1**
(43) Date of publication of application: **10.09.2025**
(21) Application number: 23907812.4
(22) Date of filing: 21.12.2023
(51) Int. Cl.: H01M 10/0567, H01M 10/0568, H01M 4/525, H01M 4/505, H01M 10/052

(54) **LITHIUM SECONDARY BATTERY**

(30) Priority: 21.12.2022 KR 20220181142; 20.12.2023 KR 20230187435
(71) Applicant: LG Energy Solution, Ltd., Seoul 07335 (KR)
(72) Inventor: JI, Su Hyeon, Daejeon 34122 (KR); LEE, Jung Min, Daejeon 34122 (KR); LEE, Chul Haeng, Daejeon 34122 (KR)
(74) Representative: Hoffmann Eitle
(86) International application number: PCT/KR2023/021270
(87) International publication number: WO 2024/136529

(57) **Abstract**

The prevent invention provides a lithium secondary battery including a positive electrode; a negative electrode; a separator interposed between the positive electrode and the negative electrode; and a non-aqueous electrolyte, wherein the positive electrode includes a positive electrode active material, which includes a lithium transition metal oxide represented by Chemical Formula A below, the non-aqueous electrolyte includes a lithium salt, an organic solvent, and an additive, and the additive includes a first additive, which includes vinylethylene carbonate.

[Chemical Formula A] Li₁₊ₓ[NiₐCo_{b}Mn_{c}M¹_{d}]O_{2+w}

In Chemical Formula A, 0≤x≤0.5, a+b+c+d=1, 0.5≤a≤0.7, 0≤b≤0.15, c=1-a-b-d, 0≤d≤0.1, 0≤b/a≤0.2, 1≤a/c≤3, 0≤w≤1, and M¹ is one and more selected from W, Cu, Fe, V, Cr, Ti, Zr, Zn, Al, In, Ta, Y, La, Sr, Ga, Sc, Gd, Sm, Ca, Ce, Nb, Mg, B, and Mo.

## Description

### [Technical Field]

### Cross-Reference to Related Application

This application claims priority to and the benefit of Korean Patent Application No. 10-2022-0181142, filed on December 21, 2022, the entire contents of which are incorporated herein by reference.

### Technical Field

The present invention relates to a lithium secondary battery.

### [Background Art]

As the application of lithium secondary batteries has recently expanded not only to electricity, electronics, telecommunication, and power supply to electronic devices such as computers, but also to power storage and supply to large-area devices such as automobiles and power storage devices, there is increasing demand for secondary batteries with high capacity, high power, and high stability.

The lithium secondary battery is generally composed of a positive electrode including a positive electrode active material, a negative electrode including a negative electrode active material, an electrolyte that serves as a medium for transferring lithium ions, and a separator. As the negative electrode active material, carbon-based active materials and silicon-based active materials can be used. In addition, lithium transition metal oxides such as lithium cobalt oxide (LiCoO₂), lithium nickel oxide (LiNiO₂), and a lithium nickel-cobalt-manganese composite transition metal oxide can be used as the positive electrode active material.

Recently, in order to increase the energy density of the positive electrode, lithium nickel-cobalt-manganese composite transition metal oxides with a nickel content of 80 mol% or more relative to the transition metals have been studied. However, when the nickel content of the lithium nickel-cobalt-manganese composite transition metal oxide increases, the thermal stability of the positive electrode is reduced.

In order to lower the nickel content of the lithium nickel-cobalt-manganese composite transition metal oxide to prevent the above problem, the driving voltage need to be increased to achieve the required energy density, but there is a problem in that electrolyte side reactions at the positive electrode become more intense when operating at such a high voltage.

### [Disclosure]

### [Technical Problem]

The present invention was devised to solve the above-mentioned problem and is directed to providing a lithium secondary battery with improved lifetime performance and storage performance when operating at high voltages, and the lithium secondary battery uses a lithium transition metal oxide with the nickel content reduced to a certain level as a positive electrode active material.

### [Technical Solution]

The present invention provides a lithium secondary battery including: a positive electrode; a negative electrode; a separator interposed between the positive electrode and the negative electrode; and a non-aqueous electrolyte, wherein the positive electrode includes a positive electrode active material, which includes a lithium transition metal oxide represented by Chemical Formula A below, the non-aqueous electrolyte includes a lithium salt, an organic solvent, and an additive, and the additive includes a first additive, which includes vinylethylene carbonate.

[Chemical Formula A] Li₁₊ₓ[NiₐCo_{b}Mn_{c}M¹_{d}]O_{2+w}

In Chemical Formula A, 0≤x≤0.5, a+b+c+d=1, 0.5≤a≤0.7, 0≤b≤0.15, c=1-a-b-d, 0≤d≤0.1, 0≤b/a≤0.2, 1≤a/c≤3, 0≤w≤1, and M¹ is one or more selected from W, Cu, Fe, V, Cr, Ti, Zr, Zn, Al, In, Ta, Y, La, Sr, Ga, Sc, Gd, Sm, Ca, Ce, Nb, Mg, B, and Mo.

### [Advantageous Effects]

A lithium secondary battery of the present invention uses a lithium transition metal oxide with the nickel content adjusted to a certain range as a positive electrode active material, and vinylethylene carbonate (VEC) is used as an additive of a non-aqueous electrolyte. The lithium secondary battery according to the present invention can significantly improve lifetime performance and storage performance, especially at high temperatures, when operating at high voltages.

### [Modes of the Invention]

Terms and words used in this specification and claims should not be construed as limited to their conventional or dictionary meanings but should be construed as a meaning and concept consistent with the technical idea of the present invention based on the principle that the inventors can properly define the concept of terms in order to describe their invention in the best way.

In this specification, the term "include," "provide," or "have" is intended to designate the presence of the implemented features, numbers, steps, elements, or combinations thereof, and it should be understood that it does not exclude in advance the presence or addition of other features, numbers, steps, elements, or combinations thereof.

Before describing the present invention, unless otherwise specified in the present invention, "*" refers to a connected portion (binding site) between the same or different atoms or terminal parts of a chemical formula.

In the description of "Cₐ to C_{b}" herein, "a" and "b" are the number of carbon atoms contained in a particular functional group. In other words, the functional group may contain "a" to "b" carbon atoms. For example, a "C₁ to C₅ alkyl group" is an alkyl group containing 1 to 5 carbon atoms, such as CH₃-, CH₃CH₂-, CH₃CH₂CH₂-, (CH₃)₂CH-, CH₃CH₂CH₂CH₂-, (CH₃)₂CHCH₂-, CH₃CH₂CH₂CH₂CH₂-, (CH₃)₂CHCH₂CH₂-, and the like.

In this specification, all alkyl groups or aryl groups may be substituted or unsubstituted. Unless otherwise defined, the term "substitution" means that at least one hydrogen bonded to carbon is substituted with an element other than hydrogen, for example, with a C₁ to C₂₀ alkyl group, a C₂ to C₂₀ alkenyl group, a C₂ to C₂₀ alkynyl group, C₁ to C₂₀ alkoxy group, a C₃ to C₁₂ cycloalkyl group, a C₃ to C₁₂ cycloalkenyl group, a C₃ to C₁₂ cycloalkynyl group, a C₃ to C₁₂ heterocycloalkyl group, a C₃ to C₁₂ heterocycloalkenyl group, a C₂ to C₁₂ heterocycloalkynyl group, a C₆ to C₁₂ aryloxy group, a halogen atom, a C₁ to C₂₀fluoroalkyl group, a nitro group, a C₆ to C₂₀ aryl group, a C₂ to C₂₀ heteroaryl group, and a C₆ to C₂₀ haloaryl group.

Hereinafter, the present invention will be described in more detail.

### Lithium secondary battery

The present invention relates to a lithium secondary battery.

The lithium secondary battery according to the present invention includes: a positive electrode; a negative electrode; a separator interposed between the positive electrode and the negative electrode; and a non-aqueous electrolyte, wherein the positive electrode includes a positive electrode active material, which includes a lithium transition metal oxide represented by Chemical Formula A below, the non-aqueous electrolyte includes a lithium salt, an organic solvent, and an additive, and the additive includes a first additive, which includes vinylethylene carbonate.

[Chemical Formula A] Li₁₊ₓ[NiₐCo_{b}Mn_{c}M¹_{d}]O_{2+w}

In Chemical Formula A, 0≤x≤0.5, a+b+c+d=1, 0.5≤a≤0.7, 0≤b≤0.15, c=1-a-b-d, 0≤d≤0.1, 0≤b/a≤0.2, 1≤a/c≤3, 0≤w≤1, and M¹is one or more selected from W, Cu, Fe, V, Cr, Ti, Zr, Zn, Al, In, Ta, Y, La, Sr, Ga, Sc, Gd, Sm, Ca, Ce, Nb, Mg, B, and Mo.

The lithium secondary battery of the present invention uses a lithium transition metal oxide with the nickel content adjusted to a certain range as a positive electrode active material, and vinylethylene carbonate (VEC) is used as an additive for the non-aqueous electrolyte. The lithium secondary battery according to the present invention may significantly improve lifetime performance and storage performance, especially at high temperatures, when operating at high voltages.

The lithium secondary battery includes: a positive electrode; a negative electrode; a separator; and a non-aqueous electrolyte. Specifically, the lithium secondary battery includes: a positive electrode; a negative electrode opposite the positive electrode; a separator interposed between the positive electrode and the negative electrode; and a non-aqueous electrolyte. The lithium secondary battery may be manufactured by accommodating an electrode assembly including: a positive electrode; a negative electrode opposite the positive electrode; and a separator interposed between the positive electrode and the negative electrode in a battery case and then injecting a non-aqueous electrolyte.

### (1) Positive electrode

The positive electrode includes a positive electrode active material.

The positive electrode active material includes a lithium transition metal oxide represented by Chemical Formula A below.

[Chemical Formula A] Li₁₊ₓ[NiₐCo_{b}Mn_{c}M¹_{d}]O_{2+w}

In Chemical Formula A, 0≤x≤0.5, a+b+c+d=1, 0.5≤a≤0.7, 0≤b≤0.15, c=1-a-b-d, 0≤d≤0.1, 0≤b/a≤0.2, 1≤a/c≤3, 0≤w≤1, and M¹ is one or more selected from W, Cu, Fe, V, Cr, Ti, Zr, Zn, Al, In, Ta, Y, La, Sr, Ga, Sc, Gd, Sm, Ca, Ce, Nb, Mg, B, and Mo.

The lithium transition metal oxide represented by Chemical Formula A is distinguished from, for example, a high nickel lithium transition metal oxide in which the Ni content exceeds70 mol% relative to metals other than lithium. The high nickel lithium transition metal oxide is not preferable because it contains a large amount of nickel, which reduces thermal stability.

Since the nickel content of the compound represented by Chemical Formula A is less than that of the high nickel lithium transition metal oxide, it needs to operate at high voltages (for example, 4.35 V or more) to increase the energy density of the positive electrode. However, as electrolyte side reactions at the positive electrode become more intense, there is a problem in that lifetime performance and storage performance are significantly reduced.

The lithium secondary battery according to the present invention uses a lithium transition metal oxide represented by Chemical Formula A as a positive electrode active material in order to achieve high energy density and excellent lifetime performance and storage performance simultaneously, and vinylethylene carbonate (first additive) is used as an additive for the non-aqueous electrolyte. The vinylethylene carbonate (first additive) may form a stable film on the positive electrode when operating at high voltages, thereby being able to significantly improve lifetime performance and storage performance, and specifically lifetime performance and storage performance at high temperatures, when operating at high voltages.

The effect of improving battery performance at high voltages by applying the non-aqueous electrolyte may be achieved when a positive electrode active material, which includes a lithium transition metal oxide having Chemical Formula A, is used. For example, in the case of high nickel lithium transition metal oxides that do not satisfy the composition of Chemical Formula A such as Li[Ni_{0.8}Co_{0.1}Mn_{0.1}]O₂, the proportion of Ni in the transition metals or the molar ratio of Ni/Mn is very high, and during charging and discharging, as the axis change in the lattice is large due to the increase and decrease in Ni oxidation number, surface side reactions become more intense due to Ni, which is unstable in terms of energy, and thus it is difficult to achieve the performance improvement effect through the organic solvent and the additive. In addition, high nickel lithium transition metal oxides such as Li[Ni_{0.8}Co_{0.1}Mn_{0.1}]O₂ have a high Ni/Mn molar ratio, and a large amount of rock-salt structure is present on the surface due to the phase change when operating at high voltages, making it difficult to intercalate and deintercalate lithium ions and form a positive electrode film through the additive. In the case of lithium transition metal oxides that do not satisfy Chemical Formula A such as Li[Ni_{0.6}Co_{0.2}Mn_{0.2}]O₂, the proportion of Co in the transition metals is very high, which increases irreversibility within the structure, and thus it is difficult to achieve the performance improvement effect through the formation of an positive electrode film through the additive. Therefore, in the case of using a compound that is not represented by Chemical Formula A, it is difficult to improve lifetime performance and storage performance to a desired level even when the non-aqueous electrolyte according to the present invention is used.

In Chemical Formula A, x may satisfy0≤x≤0.5, and specifically 0≤x≤0.2.

In Chemical Formula A, a may satisfy 0.5≤a≤0.7, and specifically 0.55≤a≤0.65.

In Chemical Formula A, b satisfies 0≤b≤0.15. b is the mole percentage of Co among metals other than lithium in the lithium transition metal oxide represented by Chemical Formula A, and according to the present invention, it is possible to achieve cost effectiveness by lowering the Co content and improve structural stability of the positive electrode active material by relatively increasing the proportion of Mn. In Chemical Formula A, b may satisfy specifically0≤b≤0.1, and more specifically 0≤b≤0.05.

In Chemical Formula A, a and b satisfy 0≤b/a≤0.2. When b/a exceeds 0.2, the proportion of Co in the transition metals is very high, and irreversibility within the structure increases, making it difficult to achieve a performance improvement effect by forming a positive electrode film through the additive. Specifically, in Chemical Formula A, a and b may satisfy0.05≤b/a≤0.2.

In Chemical Formula A, a,b,c, and d satisfy c=1-a-b-d and 1≤a/c≤3. c is the molar percentage of Mn among metals other than lithium in the lithium transition metal oxide represented by Chemical Formula A, and according to the present invention, the structural stability of the positive electrode active material may be improved by adjusting the molar ratio of Ni to Mn to 1≤a/c≤3. Specifically, 1.5≤a/c≤2.5 may be satisfied.

In Chemical Formula A, M¹ may be understood as a doped element of the lithium transition metal oxide and may be specifically one or more selected from W, Cu, Fe, V, Cr, Ti, Zr, Zn, Al, In, Ta, Y, La, Sr, Ga, Sc, Gd, Sm, Ca, Ce, Nb, Mg, B, and Mo. d may satisfy 0≤d≤0.1, and specifically 0≤d≤0.05.

In Chemical Formula A, a/(b×c) may be 18 to 50, specifically 18 to 40, and more specifically 20 to 35. Within this range, the contents of nickel, cobalt, and manganese in Chemical Formula A are harmoniously adjusted, and thus the performance improvement effect by forming a positive electrode film through an additive and the structural stability of the positive electrode active material may be simultaneously improved.

The positive electrode active material may be in a particle form. Specifically, the positive electrode active material is in the form of a single particle composed of one single nodule or a quasi-single particle, which is a complex of 30 or less nodules, and specifically, the positive electrode active material may be a quasi-single particle, which is a complex of 2 to 20, and more specifically 2 to10 nodules, or a combination thereof. In this case, particle breakage is prevented when an electrode of the positive electrode active material is manufactured, and internal cracks due to volume expansion/contraction of nodules during charging and discharging are prevented, and the effect of improving lifetime characteristics and storage characteristics at high temperatures may be improved.

The positive electrode active material may have an average particle diameter (D₅₀) of 1 µm to 10 µm, specifically 2 µm to 8 µm, more specifically 3 µm to 7 µm, still more specifically 3 µm to 5 µm, and even more specifically 3.5 µm to 4.5 µm. Within the above range, excellent processability in electrode manufacturing may be achieved, electrochemical properties may be increased due to high electrolyte impregnation, resistance may be reduced, and output characteristics may be improved.

The positive electrode active material may have a specific surface area of 0.1 m²/g to 3.0 m²/g, specifically 0.3 m²/g to 2.5 m²/g, more specifically 0.4 m²/g to 1.8 m²/g, still more specifically 0.5 m²/g to 1.0 m²/g, and even more specifically 0.7 m²/g to 0.9 m²/g. Within the above range, the rolling characteristics of the electrode may be improved, and side reactions with the electrolyte may be suppressed due to reduced particle breakage.

The positive electrode may include: a positive electrode current collector; and a positive electrode active material layer disposed on at least one side of the positive electrode current collector. The positive electrode active material may be included in the positive electrode active material layer.

The positive electrode current collector is not particularly limited as long as it has high conductivity without causing chemical changes in the battery. Specifically, the positive electrode current collector may include at least one selected from the group consisting of copper, stainless steel, aluminum, nickel, titanium, calcined carbon, and an aluminum-cadmium alloy, with aluminum being preferred.

The positive electrode current collector may typically have a thickness of 3 to 500µm.

The positive electrode current collector may have fine irregularities formed on its surface to strengthen the bonding force of the positive electrode active material. For example, the positive electrode current collector may be used in various forms such as films, sheets, foils, nets, porous materials, foams, and non-woven materials.

The positive electrode active material layer may be disposed on at least one side of the positive electrode current collector, and specifically, disposed on one or both sides of the positive electrode current collector.

The positive electrode active material may be included in the positive electrode active material layer in an amount of 80 wt% to 99 wt%, preferably 92 wt% to 98.5 wt%, in consideration of exhibiting sufficient capacity of the positive electrode active material.

Since other positive electrode active materials have been described above, description thereof will be omitted.

The positive electrode active material layer may further include a binder and/or a conductive material along with the positive electrode active material.

The binder is a component that helps in the binding of the active material and the conductive material and the binding of the current collector and may specifically include at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylenepropylene-diene monomer (EPDM), a sulfonated EPDM, styrene-butadiene rubber, and fluorine rubber, with polyvinylidene fluoride being preferred.

The binder may be included in the positive electrode active material layer in an amount of 1 wt% to 20 wt%, and preferably 1.2 wt% to 10 wt% to ensure a sufficient binding force between components including the positive electrode active material.

The conductive material may be used to assist and improve conductivity in secondary batteries and is not particularly limited as long as it has conductivity without causing chemical changes. Specifically, the positive electrode conductive material may include at least one selected from the group consisting of: graphite including natural graphite or artificial graphite; carbon black including carbon black, acetylene black, ketjen black, channel black, furnace black, lamp black, and thermal black; conductive fibers including carbon fiber and metal fiber; conductive tubes including carbon nanotubes; fluorocarbon; metal powders including aluminum and nickel powders; conductive whiskers including zinc oxide and potassium titanate; conductive metal oxides including titanium oxide; and polyphenylene derivatives, with carbon nanotubes being preferred in order to improve conductivity.

The conductive material may be included in the positive electrode active material layer in an amount of 1 wt% to20 wt%, and preferably 1.2 wt% to 10 wt% in order to ensure sufficient electrical conductivity.

The positive electrode active material layer may have a thickness of 30 µm to 400 µm, and preferably 40 µm to 200µm.

The positive electrode may be manufactured by coating the positive electrode current collector with a positive electrode slurry including a positive electrode active material and optionally a binder, a conductive material, and a solvent for forming a positive electrode slurry and then drying and rolling.

The solvent for forming a positive electrode slurry may include an organic solvent such as N-methyl-2-pyrrolidone (NMP). The solid content of the positive electrode slurry may be 40 wt% to 90 wt%, and specifically 50 wt% to 80 wt%.

### (2) Negative electrode

The negative electrode may face the positive electrode.

The negative electrode includes a negative electrode active material.

The negative electrode active material is a material capable of reversibly intercalating/deintercalating lithium ions and may include at least one selected from the group consisting of carbon-based active materials, metal/metalloid-based active materials, and lithium metal, and may specifically include at least one selected from the group consisting of carbon-based active materials and metal/metalloid-based active materials.

The carbon-based active material may include at least one selected from the group consisting of artificial graphite, natural graphite, hard carbon, soft carbon, carbon black, graphene, and fibrous carbon, preferably at least one selected from the group consisting of artificial graphite and natural graphite.

The carbon-based active material may have an average particle diameter (D₅₀) of 10 µm to 30 µm, and preferably 15 µm to 25 µm, in order to ensure structural stability during charging and discharging and reduce side reactions with the electrolyte.

Specifically, the metal/metalloid-based active material may include: at least one metal/metalloid selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one metal/metalloid selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an oxide of at least one metal/metalloid selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; lithium titanium oxide (LTO); lithium vanadium oxide, and the like.

More specifically, the metal/metalloid-based active material may include a silicon-based active material.

The silicon-based active material may include a compound represented by SiOₓ (0≤x<2). In the case of SiO₂, considering that SiO₂ does not react with lithium ions and cannot store lithium, x is preferably within the above range, and more preferably, the silicon-based active material may be SiO.

The silicon-based active material may have an average particle diameter (D₅₀) of 1µm to 30 µm, and preferably 2 µm to 15 µm in order to ensure structural stability during charging and discharging and reduce side reactions with the electrolyte.

The negative electrode may include: a negative electrode current collector; and a negative electrode active material layer disposed on at least one side of the negative electrode current collector. The negative electrode active material may be included in the negative electrode active material layer.

The negative electrode current collector is not particularly limited as long as it has high conductivity without causing chemical changes in the battery. Specifically, the negative electrode current collector may be copper, stainless steel, aluminum, nickel, titanium, calcined carbon, copper or stainless steel whose surface is treated with carbon, nickel, titanium, silver, and the like, aluminum-cadmium alloys, and the like.

The negative electrode current collector may typically have a thickness of 3 to 500 µm.

The negative electrode current collector may have fine irregularities formed on its surface to strengthen the bonding force of the negative electrode active material. For example, the negative electrode current collector may be used in various forms such as films, sheets, foils, nets, porous materials, foams, and non-woven materials.

The negative electrode active material layer may be disposed on at least one side of the negative electrode current collector, and specifically, disposed on one or both sides of the negative electrode current collector.

The negative electrode active material may be included in the negative electrode active material layer in an amount of 60 wt% to 99 wt%, and preferably 75 wt% to 95wt%.

Since other negative electrode active materials have been described above, description thereof will be omitted.

The negative electrode active material layer may further include a binder and/or a conductive material along with the negative electrode active material.

The binder is used to improve battery performance by improving the adhesion between the negative electrode active material layer and the negative electrode current collector, and may include, for example, at least one selected from the group consisting of a polyvinylidene fluoride-hexafluoropropylene copolymer (PVDF-co-HFP), polyvinylidenefluoride (PVDF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluororubber, and materials in which hydrogen is substituted with Li, Na, or Ca, and may also include various copolymers thereof.

The binder may be included in the negative electrode active material layer in an amount of 0.5 wt% to10 wt%, and preferably1 wt% to5wt%.

The conductive material is not particularly limited as long as it has conductivity without causing chemical changes in the battery, and for example, conductive materials such as graphite including natural graphite or artificial graphite; carbon black including carbon black, acetylene black, ketjen black, channel black, furnace black, lamp black, and thermal black; conductive fibers including carbon fiber and metal fiber; conductive tubes including carbon nanotubes; fluorocarbon; metal powders including aluminum and nickel powders; conductive whiskers including zinc oxide and potassium titanate; conductive metal oxides including titanium oxide; and polyphenylene derivatives may be used.

The conductive material may be included in the negative electrode active material layer in an amount of 0.5 wt% to10wt%, and preferably 1 wt% to5 wt%.

The negative electrode active material layer may have a thickness of 10 µm to 200 µm, and preferably 20 µm to 150 µm.

The negative electrode may be manufactured by coating at least one side of the negative electrode current collector with a negative electrode slurry including a negative electrode active material, a binder, a conductive material and/or a solvent for forming a negative electrode slurry and then drying and rolling.

The solvent for forming a negative electrode slurry may include, for example, at least one selected from the group consisting of distilled water, N-methyl-2-pyrrolidone (NMP), ethanol, methanol, and isopropyl alcohol in order to easily disperse the negative electrode active material, the binder, and/or the conductive material, with distilled water being preferred. The solid content of the negative electrode slurry may be 30 wt% to 80 wt%, and specifically 40 wt% to70 wt%.

### (3) Separator

The separator may be interposed between the positive electrode and the negative electrode.

The separator may be a typical porous polymer film conventionally used as a separator, and for example, porous polymer films prepared by polyolefin-based polymers such as an ethylene homopolymer, propylene homopolymer, ethylene/butene copolymer, ethylene/hexene copolymer, and ethylene/methacrylate copolymer, and the like may be used, either alone or by laminating them, or commonly used porous non-woven materials such as non-woven materials made of high melting point glass fibers and polyethylene terephthalate fibers, and the like may be used but is not limited thereto. In addition, in order to ensure heat resistance or mechanical strength, a coated separator containing ceramic components or polymers may be used, and optionally a single-layer or multi-layer structure may be used.

### (4) Non-aqueous electrolyte

The non-aqueous electrolyte includes a lithium salt, an organic solvent, and an additive.

### 1) Lithium salt

As the lithium salt used in the present invention, various lithium salts commonly used in non-aqueous electrolytes for lithium secondary batteries may be used without limitation. For example, the lithium salt may include Li⁺ as a cation and include at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and(CF₃CF₂SO₂)₂N⁻ as an anion.

Specifically, the lithium salt may include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂ and LiBETI (LiN(SO₂CF₂CF₃)₂). Specifically, the lithium salt may include at least one selected from the group consisting of LiBF₄, LiClO₄, LiPF₆, LiBOB (LiB(C₂O₄)₂), LiCF₃SO₃, LiTFSI (LiN(SO₂CF₃)₂), LiFSI ((LiN(SO₂F)₂), andLiBETI (LiN(SO₂CF₂CF₃)₂).

The lithium salt may be included in the non-aqueous electrolyte at a concentration of 0.5 M to 5 M, specifically 0.8 M to 4 M, and more specifically 0.8 M to 2.0 M. When the lithium salt concentration satisfies the above range, the Li⁺ transference number and the dissociation degree of lithium ions are improved, and thus the output characteristics of the battery may be improved.

### 2) Organic solvent

The organic solvent is a non-aqueous solvent commonly used in lithium secondary batteries and is not particularly limited as long as it can minimize decomposition due to oxidation reactions during the charging and discharging of secondary batteries.

Specifically, the organic solvent may include at least one selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixture thereof.

The cyclic carbonate-based organic solvent is a high-viscosity organic solvent that may easily dissociate lithium salts in an electrolyte due to its high dielectric constant, and may specifically include at least one organic solvent selected from the group consisting of ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate, more specifically include at least one selected from the group consisting of ethylene carbonate (EC) and fluoroethylene carbonate (FEC), and still more specifically include ethylene carbonate (EC).

The linear carbonate-based organic solvent is an organic solvent with low viscosity and a low dielectric constant and may specifically include at least one selected from the group consisting of dimethyl carbonate (DMC), diethyl carbonate (DEC), dipropyl carbonate, ethylmethyl carbonate (EMC), methylpropyl carbonate, and ethylpropyl carbonate, more specifically include at least one selected from the group consisting of EMC and DEC, and still more specifically include EMC.

The organic solvent may be a mixture of a cyclic carbonate-based organic solvent and a linear carbonate-based organic solvent. The cyclic carbonate-based organic solvent and the linear carbonate-based organic solvent may be mixed at a volume ratio of 5:95 to 40:60, and specifically 10:90 to 25:75. When the mixing ratio of the cyclic carbonate-based organic solvent and the linear carbonate-based organic solvent satisfies the above range, not only high dielectric constant and low viscosity characteristics, but also excellent ionic conductivity may be achieved.

In order to prepare an electrolyte with high ionic conductivity, the organic solvent may further include, in addition to, at least one carbonate-based organic solvent selected from the group consisting of the cyclic carbonate-based organic solvent and the linear carbonate-based organic solvent, at least one ester-based organic solvent selected from the group consisting of the linear ester-based organic solvent and the cyclic ester-based organic solvent.

The linear ester-based organic solvent may specifically include at least one selected from the group consisting of methyl acetate, ethyl acetate, propyl acetate, methyl propionate, ethyl propionate, propyl propionate, and butyl propionate.

The cyclic ester-based organic solvent may specifically include at least one selected from the group consisting of γ-butyrolactone, γ-valerolactone, γ-caprolactone, σ-valerolactone, and ε-caprolactone.

The organic solvent may be used by adding organic solvents commonly used in non-aqueous electrolytes without limitation, if necessary. For example, at least one organic solvent of an ether-based organic solvent, a glyme-based solvent, and a nitrile-based organic solvent may be further included.

The ether-based solvent may be at least one selected from the group consisting of dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL), or a mixture of two or more thereof, but is not limited thereto.

The glyme-based solvent has a high dielectric constant and low surface tension compared to linear carbonate-based organic solvents, and its reactivity with metals is low, and the glyme-based solvent may include at least one selected from the group consisting of dimethoxyethane (glyme, DME), diethoxyethane, digylme, tri-glyme, and tetra-glyme (TEGDME) but is not limited thereto.

The nitrile-based solvent may be one or more selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile but is not limited thereto.

### 3) Additives

The non-aqueous electrolyte includes an additive.

The additive includes a first additive. The first additive includes vinylethylene carbonate (VEC).

The vinylethylene carbonate may form a film on a positive electrode when a lithium secondary battery is operating at a high voltage (such as 4.35 V or more). Therefore, when it is combined with the positive electrode active material according to the present invention, which requires high voltage operation to increase energy density, electrolyte side reactions may be significantly prevented, and lifetime performance and storage performance may be improved to a high level. On the other hand, when a high nickel lithium transition metal oxide is used as the positive electrode active material, a lithium secondary battery is operating at a low driving voltage (such as 4.2 V), and the vinylethylene carbonate forms a film on a negative electrode, not a positive electrode, and thus, the purpose of the prevent invention to prevent electrolyte side reactions of the positive electrode may not be achieved.

The first additive may be included in the non-aqueous electrolyte in an amount of 0.01 wt% to 10 wt%, specifically 0.05wt% to 7 wt%, more specifically 0.1 wt% to 1 wt%, and still more specifically 0.3 wt% to 0.7 wt%. When the first additive is used in the above range, the effect of improving lifetime performance and storage performance described above may be achieved while a problem of increasing resistance caused by excess addition may be prevented.

The additive may further include a second additive along with the first additive.

Specifically, the second additive may include at least one selected from the group consisting of a lithium salt-based additive, a nitrogen-containing heterocyclic compound-based additive, a cyclic sulfur compound-based additive, and a propargyl group-containing cyclic carbonate-based additive. The second additive may be used along with the first additive to form a more robust and stable positive electrode film.

The lithium salt-based additive may specifically include at least one selected from the group consisting of LiBF₄, lithium bis(oxalato) borate (LiB(C₂O₄)₂, LiBOB), lithium difluoro(oxalato)borate (LiF₂OB, LiODFB), lithium difluorophosphate (LiPO₂F₂, LiDFP), and lithium difluoro(bisoxalato)phosphate (LiDFOP), and more specifically include LiDFP.

The nitrogen-containing heterocyclic compound-based additive may specifically include at least one compound selected from the group consisting of compounds represented by Chemical Formula 1-1, Chemical Formula 1-2, and Chemical Formula 1-3 below, and more specifically include a compound represented by Chemical Formula 1-1 below.

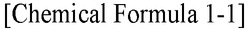

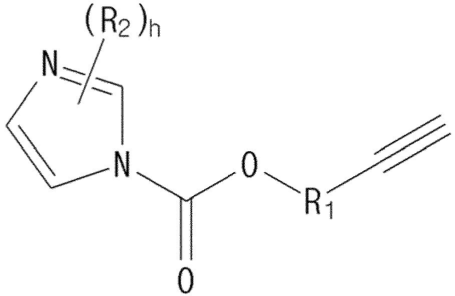

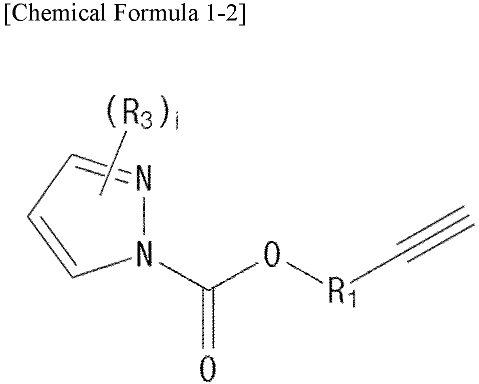

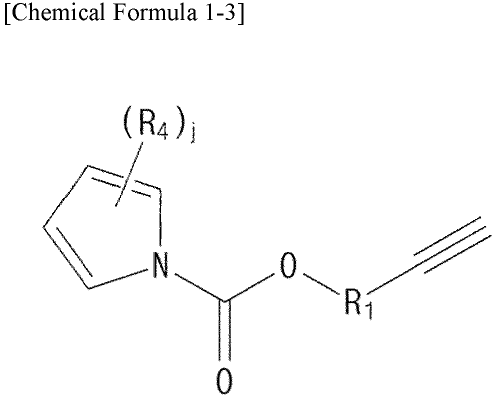

In Chemical Formula 1-1, Chemical Formula 1-2, and Chemical Formula 1-3, R₁ is a C₁ to C₃ alkylene group, R₂, R₃, and R₄ are independently selected from hydrogen, a C₁ to C₃ alkyl group, and -CN, h is an integer from 0 to 3, i is an integer from 0 to3 , and j is an integer from 0 to 4.

Specifically, in Chemical Formula 1-1, Chemical Formula 1-2, and Chemical Formula 1-3, R₁ is a C₁ to C₃ alkylene group, and more specifically, a methylene group (-CH₂-). In Chemical Formula 1-1, Chemical Formula 1-2, and Chemical Formula 1-3, R₂, R₃, and R₄ may be hydrogen, and h, i, and j may be 0.

More specifically, the nitrogen-containing heterocyclic compound-based additive may include a compound represented by Chemical Formula 1-1-A below.

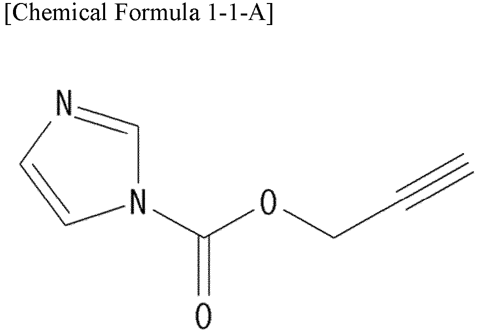

The cyclic sulfur compound-based additive may include at least one compound selected from the group consisting of compounds represented by Chemical Formula 2-1 to 2-17, and specifically, include a compound represent by Chemical Formula 2-1 below.

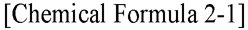

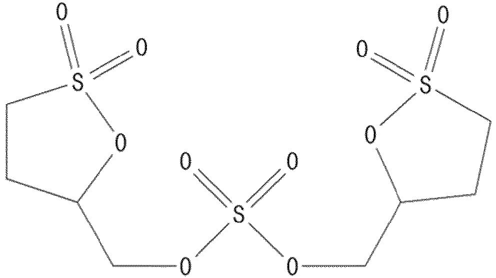

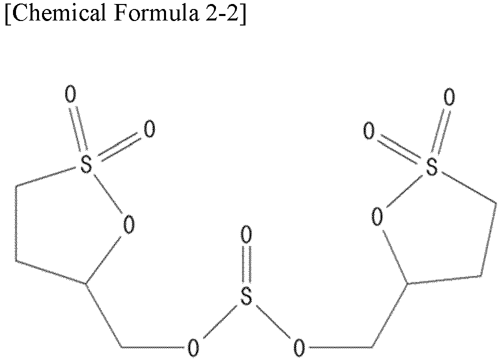

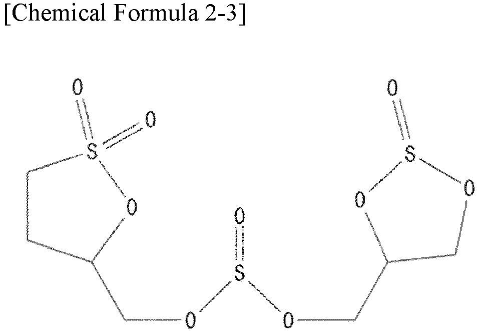

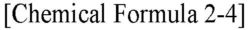

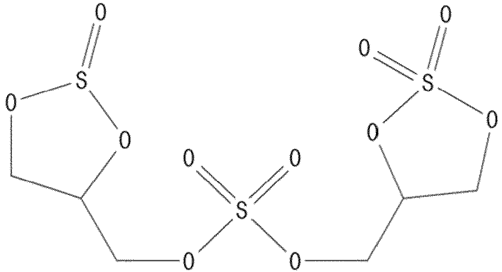

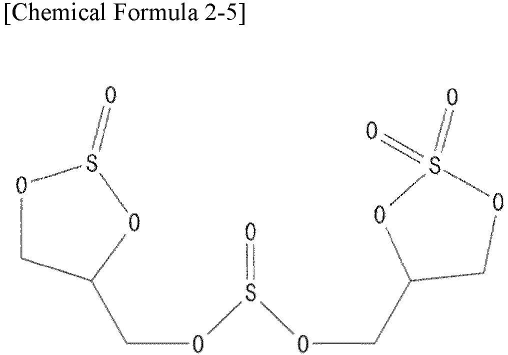

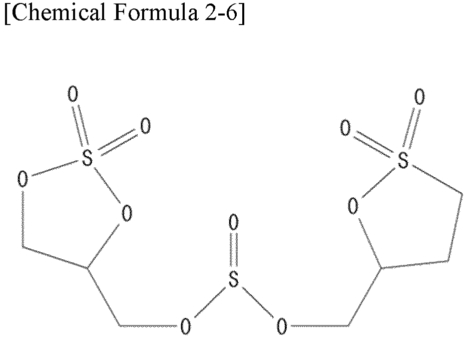

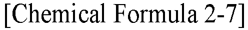

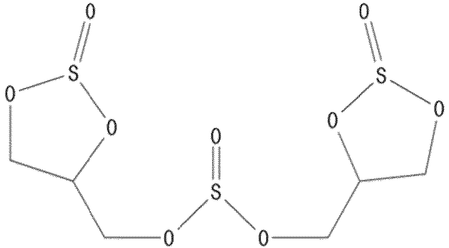

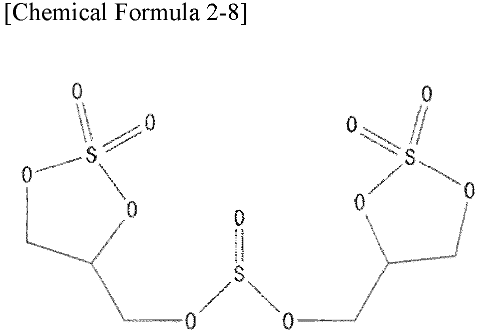

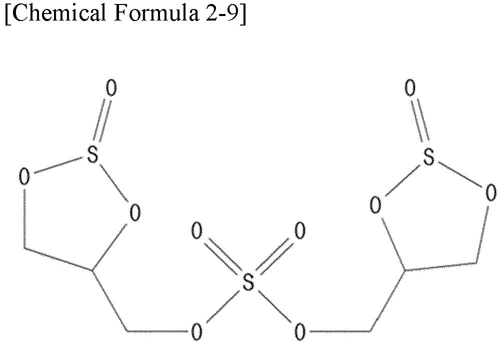

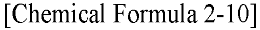

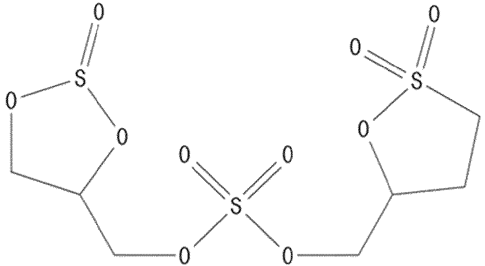

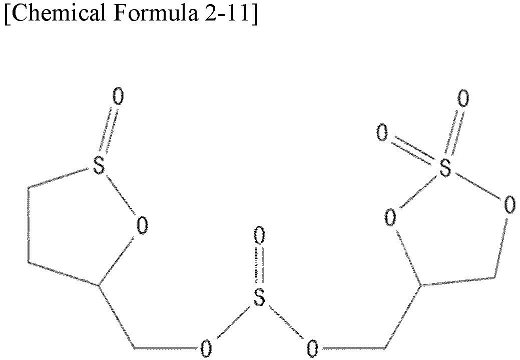

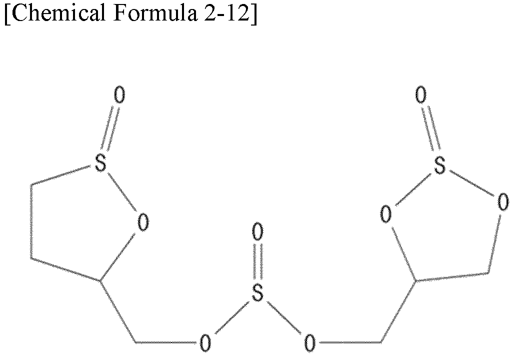

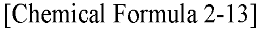

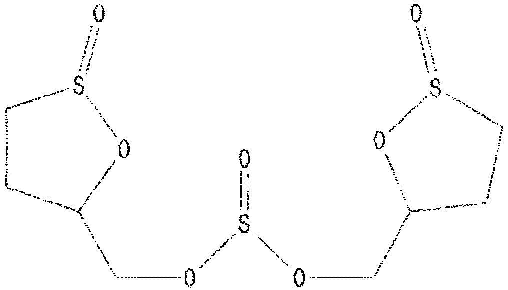

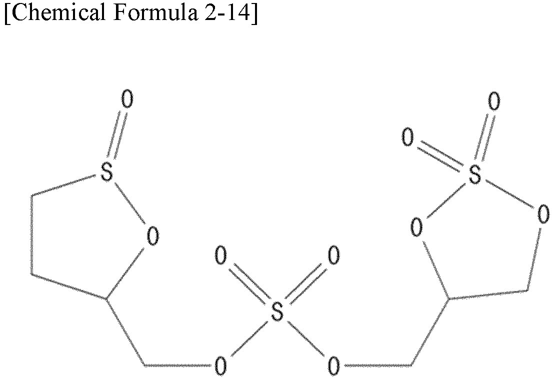

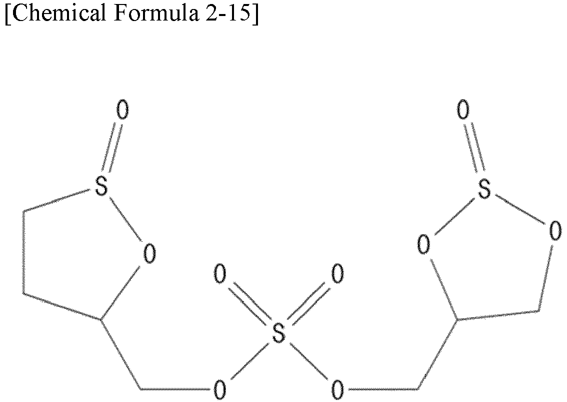

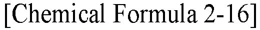

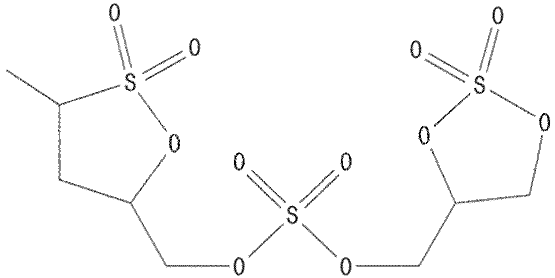

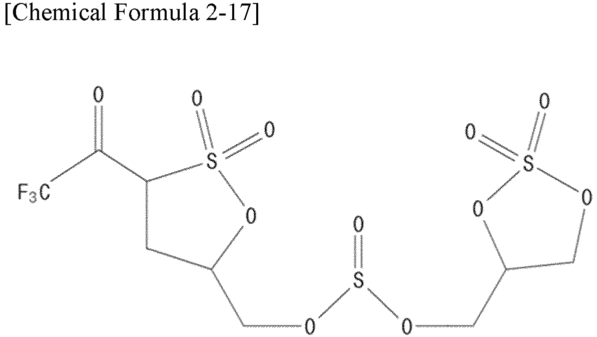

The propargyl group-containing cyclic carbonate-based additive may specifically include a compound represented by Chemical Formula 3 below.

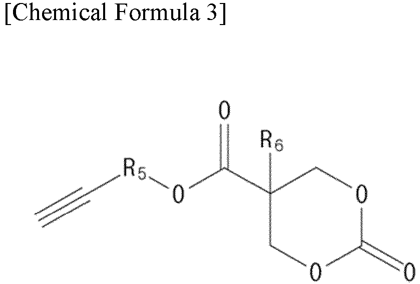

In Chemical Formula 3, R₅ is a C₁ to C₅ alkylene group, and R₆ is a C₁ to C₅ alkyl group.

More specifically, the propargyl group-containing cyclic carbonate-based additive may include a compound represented by Chemical Formula 3-1below.

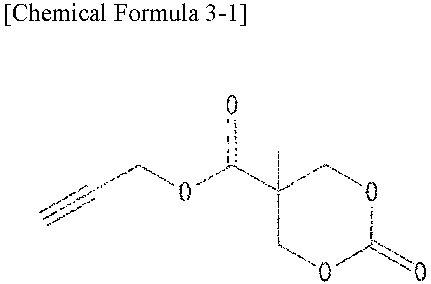

The second additive may be included in the non-aqueous electrolyte in an amount of 0.01 wt% to 10 wt%, specifically 0.05 wt% to 7 wt%, more specifically 0.1 wt% to 5 wt%, and still more specifically 0.3 wt% to 2wt%. When the second additive satisfies the above range, a stable and robust positive electrode film may be formed, and lifetime performance and storage performance of the lithium secondary battery when operating at high voltages may be improved to an excellent level.

The weight ratio of the first additive and the second additive may be 5:95 to 95:5, specifically 10:90 to 92:8, and more specifically 30:70 to 70:30, and within the above weight ratio range, the effect of using of the first additive and the second additive in combination may be achieved, and thus lifetime performance and storage performance at high temperatures of the lithium secondary battery may be preferably expressed.

The additive may further include an additional additive along with the first additive or along with the first and second additives. The additional additive may be included in the non-aqueous electrolyte to prevent the non-aqueous electrolyte from decomposing and causing the negative electrode collapse in high power conditions, improve low-temperature high-rate discharge characteristics and stability at high temperatures, prevent overcharging, or reduce battery expansion at high temperatures.

Specifically, the additional additives may be at least one selected from the group consisting of fluoroethylene carbonate, succinonitrile, adiponitrile, 3-trimethoxysilyl-propyl-N-aniline (TMSPa), and tris(trimethylsilyl) phosphite(TMSPi).

The additional additive may be included in the non-aqueous electrolyte in an amount of 0.1 wt% to15 wt%.

The lithium secondary battery of the present invention may have a driving voltage of 4.3 V or more, specifically 4.35 V or more, and more specifically 4.4 V or more. The lithium secondary battery of the present invention may achieve excellent energy density and improved lifetime performance and storage performance at high driving voltages due to the combination of the positive electrode and the non-aqueous electrolyte described above.

The outer shape of the lithium secondary battery of the present invention is not particularly limited but may be a cylindrical shape using a can, a prismatic shape, a pouch shape, or a coin shape.

Hereinafter, examples of the present invention will be described in detail. However, the following examples are intended to illustrate the present invention and are not intended to limit the scope of the invention. It is obvious to those skilled in the art that various changes and modifications can be made within the scope and the technical idea of the present description, and that such changes and modifications are included within the scope of the appended claims.

### Examples and Comparative Examples

### Example 1

### (Preparation of non-aqueous electrolyte)

As an organic solvent, a mixture of ethylene carbonate (EC) and ethylmethyl carbonate (EMC) in a volume ratio of 20:80 was used.

A non-aqueous electrolyte was prepared by adding LiPF₆ as a lithium salt and vinylethylene carbonate (VEC) as a first additive to the organic solvent.

LiPF₆ was included in the non-aqueous electrolyte at a molar concentration of 1.2 M.

The vinylethylene carbonate (VEC) was included in the non-aqueous electrolyte in an amount of 0.5 wt%.

### (Manufacture of lithium secondary battery)

A positive electrode active material (Li[Ni_{0.60}Co_{0.05}Mn_{0.35}]O₂), a conductive material (carbon nanotubes), and a binder(polyvinylidene fluoride) were added to a solvent, N-methyl-2-pyrrolidone (NMP), in a weight ratio of 97.74:0.70:1.56 to prepare a positive electrode slurry (75.5 wt% solid content). The positive electrode slurry was applied to one side of a positive electrode current collector (Al thin film) with a thickness of 15 µm, dried, and roll pressed to form a positive electrode active material layer (thickness: 136.6 µm), which was used as a positive electrode. The positive electrode active material was in a single particle or quasi-single particle form.

A negative electrode active material (natural graphite), a conductive material (carbon black), and a binder (styrene-butadiene rubber) were added to a solvent, distilled water, in a weight ratio of 96.15:1.55:2.30 to prepare a negative electrode slurry(( ) wt% solid content). The negative electrode slurry was applied to one side of a negative electrode current collector (Cu thin film) with a thickness of 15µm, dried and roll pressed to form a negative electrode active material layer(thickness: 179.8 µm), which was used as a negative electrode.

After a polyethylene porous film separator was interposed between the prepared positive electrode and negative electrode in a dry room, the prepared non-aqueous electrolyte was injected to manufacture a secondary battery.

### Example 2

A lithium secondary battery was manufactured in the same manner as in Example 1, except that 0.5 wt% of LiDFP was further added, as a second additive, to the non-aqueous electrolyte based on the weight of the non-aqueous electrolyte.

### Example 3

A lithium secondary battery was manufactured in the same manner as in Example 1, except that 0.5 wt% of the compound represented by Chemical Formula 2-1 was further added, as a second additive, to the non-aqueous electrolyte based on the weight of the non-aqueous electrolyte.

### Example 4

A lithium secondary battery was manufactured in the same manner as in Example 1, except that 0.5 wt% of the compound represented by Chemical Formula 1-1-A was further added, as a second additive, to the non-aqueous electrolyte based on the weight of the non-aqueous electrolyte.

### Example 5

A lithium secondary battery was manufactured in the same manner as in Example 1, except that 0.5 wt% of the compound represented by Chemical Formula 3-1 was further added, as a second additive, to the non-aqueous electrolyte based on the weight of the non-aqueous electrolyte.

### Example 6

A lithium secondary battery was manufactured in the same manner as in Example 1, except that 0.5 wt% of the compound represented by Chemical Formula 1-1-A and 0.5 wt% of the compound represented by Chemical Formula 3-1 were further added, as a second additive, to the non-aqueous electrolyte based on the weight of the non-aqueous electrolyte.

### Comparative Example 1

Anon-aqueous electrolyte and a lithium secondary battery were manufactured in the same manner as in Example 1, except that a first additive was not added.

### Comparative Example 2

Anon-aqueous electrolyte and a lithium secondary battery were manufactured in the same manner as in Example 1, except that 0.5 wt% of vinylene carbonate (VC) was added, as a first additive, to the non-aqueous electrolyte, instead of vinyl ethylene carbonate.

**[Table 1]**

| | Non-aqueous electrolyte | | | | | |
|---|---|---|---|---|---|---|
| | Lithium salt (LiPF₆) | Organic solvent | Additive | | | |
| | Molar concentratio n (M, based on non-aqueous electrolyte) | | First additive | | Second additive | |
| | | | Type | Content (wt%, based on non-aqueous electrol yte) | Type | Content (wt%, based on non-aqueous electrol yte) |
| Example 1 | 1.2 | EC:EMC (volume ratio of 20:80) | VEC | 0.5 | - | - |
| Example 2 | 1.2 | EC:EMC (volume ratio of 20:80) | VEC | 0.5 | LiDFP | 0.5 |
| Example 3 | 1.2 | EC:EMC (volume ratio of 20:80) | VEC | 0.5 | Chemical Formula 2-1 | 0.5 |
| Example 4 | 1.2 | EC:EMC (volume ratio of 20:80) | VEC | 0.5 | Chemical Formula 1-1-A | 0.5 |
| Example 5 | 1.2 | EC:EMC (volume ratio of 20:80) | VEC | 0.5 | Chemical Formula 3-1 | 0.5 |
| Example 6 | 1.2 | EC:EMC (volume ratio of 20:80) | VEC | 0.5 | Chemical Formula 1-1-A | 0.5 |
| | | | | | Chemical Formula 3-1 | 0.5 |
| Comparative Example 1 | 1.2 | EC:EMC (volume ratio of 20:80) | - | - | - | - |
| Comparative Example 2 | 1.2 | EC:EMC (volume ratio of 20:80) | VC | 0.5 | - | - |

### Experimental Examples

### Experimental Example 1: High-temperature cycle performance evaluation

The lithium secondary batteries of Examples 1 to 6 and Comparative Examples 1 and 2 manufactured above were charged to 4.4 V and 0.05 C under conditions of CC/CV at 0.33 C and 45 °C and then discharged to 2.5 V under conditions of CC at 0.33 C as one cycle, using an electrochemical charging and discharging device, and 300 cycles of charge and discharge were performed.

### (1) Capacity retention rate

The capacity retention rate was calculated using the equation below, and results thereof are shown in Table 2 below. Capacity retention rate (%) = {(Discharge capacity after 300 cycles/Discharge capacity after 1 cycle)} × 100

### (2) Resistance increase rate

After one cycle of charging and discharging, the discharge capacity after one cycle was measured using an electrochemical charging and discharging device, and after adjusting the SOC to 50%, a pulse of 2.5C was applied for 10 seconds to calculate the initial resistance through the difference between the voltages before and after pulse application.

After 300 cycles of charging and discharging, the resistance after 300 cycles was calculated in the same manner as above, and the resistance increase rate was calculated using the equation below, and results thereof are shown in Table 2 below. Resistance increase rate (%) = (Resistance after 300 cycles- Initial resistance)/Initial resistance× 100

**[Table 2]**

| | Capacity retention rate (%) | Resistance increase rate (%) |
|---|---|---|
| Example 1 | 82 | 22 |
| Example 2 | 93 | 10 |
| Example 3 | 90 | 12 |
| Example 4 | 93 | 13 |
| Example 5 | 91 | 12 |
| Example 6 | 92 | 11 |
| Comparative Example 1 | 77 | 28 |
| Comparative Example 2 | 70 | 27 |

Referring to Table 2, it can be seen that lithium secondary batteries of Examples 1 to 6, in which a positive electrode including a lithium transition metal oxide represented by Chemical Formula A and a non-aqueous electrolyte including a first additive (VEC) as an additive were combined, had a high capacity retention rate and a low resistance increase rate during high-temperature charging and discharging cycles compared to Comparative Example 1 and Comparative Example 2.

### Experimental Example 2: High-temperature storage performance evaluation

The lithium secondary batteries of Examples 1 to 6 and Comparative Examples 1 and 2 manufactured above were charged to 4.4 V and 0.05 C under conditions of CC/CV at 0.33 C and 25 °C and discharged to 2.5 V under conditions of CC at 0.33 C to perform initial charging and discharging, and then the batteries were charged to 4.4 V and0.05 C under conditions of CC/CV at 0.33 C and 25°C and stored at 60°C for 12 weeks.

### (1) Capacity retention rate

After 12-week storage, the lithium secondary batteries were charged to 4.4 V and 0.05 C under conditions of CC/CV at 0.33 C and 25 °C and discharged to 2.5 V under conditions of CC at 0.33 C to measure the capacity during discharging.

The capacity retention rate was evaluated according to the equation below, and results thereof are shown in Table 3. Capacity retention rate (%) = (Discharge capacity after 12-weekstorage/Initial discharge capacity) × 100

### (2) Resistance increase rate

After initial charging and discharging, the capacity at room temperature was checked, and the batteries were charged to 50% SOC based on the discharge capacity and discharged for 10 seconds at 2.5 C, at this time, the resistance was measured using the voltage drop difference and used as the initial resistance, and after 12-week storage at 60°C, the resistance was measured in the same manner and designated as the final resistance, and the resistance increase rate was calculated using the equation below, and results are shown in Table 3 below. Resistance increase rate (%) = (Final resistance- Initial resistance) / (Initial resistance) × 100

**[Table 3]**

| | Capacity retention rate (%) | Resistance increase rate (%) |
|---|---|---|
| Example 1 | 83 | 26 |
| Example 2 | 90 | 13 |
| Example 3 | 93 | 12 |
| Example 4 | 91 | 12 |
| Example 5 | 92 | 10 |
| Example 6 | 92 | 11 |
| Comparative Example 1 | 76 | 33 |
| Comparative Example 2 | 75 | 38 |

Referring to Table 3, it can be seen that lithium secondary batteries of Examples 1 to 6, in which a positive electrode including a lithium transition metal oxide represented by Chemical Formula A and a non-aqueous electrolyte including a first additive (VEC) as an additive were combined, had a high capacity retention rate and a low resistance increase rate when stored at high temperature compared to Comparative Example 1 and Comparative Example 2.

### Reference Example A

### Reference Example 1A

### (1) Preparation of non-aqueous electrolyte

A non-aqueous electrolyte was prepared in the same manner as in Example 1.

### (2) Manufacture of lithium secondary battery

A positive electrode active material (LiNi_{0.85}C_{0.05}Mn_{0.07}Al_{0.03}O₂), a conductive material (carbon nanotubes), and a binder (polyvinylidene fluoride) were added in a weight ratio of 98.0:0.7:1.3 to a solvent, N-methyl-2-pyrrolidone(NMP), to prepare a positive electrode mixture slurry (76.5 wt% solid content). The positive electrode mixture slurry was applied to one side of a positive electrode current collector (Al thin film)with a thickness of 12 µm, dried, and roll pressed to prepare a positive electrode. The positive electrode active material was in the form of secondary particles, in which a plurality of primary particles were aggregated.

A negative electrode active material (artificial graphite), a conductive material (carbon black), and a binder (styrene-butadiene rubber) were added to a solvent, distilled water, in a weight ratio of 96.5:1.5:2.0 to prepare a negative electrode mixture slurry (50 wt% solid content). The negative electrode mixture slurry was applied to one side of a negative electrode current collector (Cu thin film) with a thickness of 8 µm, dried and roll pressed to prepare a negative electrode.

After a polyethylene porous film separator was interposed between the prepared positive electrode and negative electrode in a dry room, the prepared non-aqueous electrolyte was injected to manufacture a secondary battery.

### Reference Example 2A

A lithium secondary battery was manufactured in the same manner as in Reference Example 1A, except that the non-aqueous electrolyte prepared in Comparative Example 1 was used instead of the non-aqueous electrolyte prepared in Example 1.

### Reference Example 3A

A lithium secondary battery was manufactured in the same manner as in Reference Example 1A, except that the non-aqueous electrolyte prepared in Comparative Example 2 was used instead of the non-aqueous electrolyte prepared in Example 1.

### Reference Experimental Example A

The lithium secondary batteries of Reference Examples 1A to 3A manufactured above were charged to 4.2 V and 1/40 C under conditions of CC/CV at 0.33 C and 45 °C and discharged to 2.5 V under conditions of CC at 0.33 C as one cycle, using an electrochemical charging and discharging device, and 300 charge-discharge cycles were performed.

### (1) Capacity retention rate

The capacity retention rate was calculated according to the equation below, and results thereof are shown in Table 4. Capacity retention rate (%) = {(Discharge capacity after 300 cycles/Discharge capacity after 1 cycle)} × 100

### (2) Resistance increase rate

After one cycle of charging and discharging, the discharge capacity after one cycle was measured using an electrochemical charging and discharging device, and after the SOC was adjusted to 50%, a pulse of 2.5 C was applied for 10 seconds to calculate the initial resistance through the difference between the voltages before and after the pulse application.

After 300 cycles of charging and discharging, the resistance after 300 cycles was calculated in the same manner as above, and the resistance increase rate was calculated using the equation below, and results thereof are shown in Table 4 below. Resistance increase rate (%) = (Resistance after 300 cycles- Initial resistance)/Initial resistance× 100

**[Table 4]**

| | Capacity retention rate (%) | Resistance increase rate (%) |
|---|---|---|
| Reference Example 1A | 83 | 26 |
| Reference Example 2A | 82 | 25 |
| Reference Example 3A | 85 | 23 |

Referring to Table4, it can be seen that the lithium secondary battery of Reference Example 1A had no improvement in effectiveness despite using vinylethylene carbonate as a non-aqueous electrolyte additive compared to Reference Example 2A and Reference Example 3A. In other words, considering that Reference Examples 1A to 3A, in which a high nickel lithium transition metal oxide (LiNi_{0.85}Co_{0.05}Mn_{0.07}Al_{0.03}O₂) was used as the positive electrode active material, operated at a relatively low voltage (4.2 V) and vinylethylene carbonate was mainly decomposed at the negative electrode and formed a film, it can be seen that it is difficult to prevent electrolyte side reactions of the positive electrode even when vinylethylene carbonate is used as a non-aqueous electrolyte additive. In particular, in the case of the lithium secondary battery of Reference Example 1A, it can be seen that vinylethylene carbonate used as a non-aqueous electrolyte additive actually acted as resistance through a performance comparison with Reference Example 2A and Reference Example 3A.

### Reference Example B

### Reference Example 1B

### (1) Preparation of non-aqueous electrolyte

A non-aqueous electrolyte was prepared in the same manner as in Example 1.

### (2) Manufacture of lithium secondary battery

A positive electrode active material (LiNi_{0.6}Co_{0.2}Mn_{0.2}O₂), a conductive material (carbon nanotube), and a binder(polyvinylidene fluoride) were added in a weight ratio of 98.0:0.7:1.3 to a solvent, N-methyl-2-pyrrolidone (NMP), to prepare a positive electrode mixture slurry (76.5 wt% solid content). The positive electrode mixture slurry was applied to one side of a positive electrode current collector (Al thin film) with a thickness of 12 µm, dried and roll pressed to prepare a positive electrode. The positive electrode active material was in the form of secondary particles, in which a plurality of primary particles were aggregated.

A negative electrode active material (artificial graphite), a conductive material (carbon black), a binder (styrene-butadiene rubber) were added in a weight ratio of 96.5:1.5:2.0 to a solvent, distilled water, to prepare a negative electrode mixture slurry (50 wt% solid content). The negative electrode mixture slurry was applied to one side of a negative electrode current collector (Cu thin film) with a thickness of 8 µm, dried, roll pressed to prepare a negative electrode.

After a polyethylene porous film separator was interposed between the prepared positive electrode and negative electrode in a dry room, the prepared non-aqueous electrolyte was injected to manufacture a secondary battery.

### Reference Example 2B

A lithium secondary battery was manufactured in the same manner as in Reference Example 1B, except that the non-aqueous electrolyte prepared in Comparative Example 1 was used instead of the non-aqueous electrolyte prepared in Example 1.

### Reference Example 3B

A lithium secondary battery was manufactured in the same manner as in Reference Example 1B, except that the non-aqueous electrolyte prepared in Comparative Example 2 was used instead of the non-aqueous electrolyte prepared in Example 1.

### Reference Experimental Example B

The lithium secondary batteries of Reference Examples 1B to 3B manufactured above were charged to 4.2 V and 1/40 C under conditions of CC/CV at 0.33 C and 45 °C and discharged to 2.5 V under conditions of CC at 0.33 C as one cycle, using an electrochemical charging and discharging device, and 300 charge-discharge cycles were performed.

### (1) Capacity retention rate

The capacity retention rate was calculated according to the equation below, and results thereof are shown in Table 5 below. Capacity retention rate (%) = {(Discharge capacity after 300 cycles/Discharge capacity after 1 cycle)} × 100

### (2) Resistance increase rate

After one cycle of charging and discharging, the discharge capacity after one cycle was measured using an electrochemical charging and discharging device, and after the SOC was adjusted to 50%, a pulse of 2.5 C was applied for 10 seconds to calculate the initial resistance through the difference between the voltages before and after the pulse application.

After 300 cycles of charging and discharging, the resistance after 300 cycles was calculated in the same manner as above, and the resistance increase rate was calculated using the equation below, and results thereof are shown in Table5 below. Resistance increase rate (%) = (Resistance after 300 cycles- Initial resistance)/Initial resistance× 100

**[Table 5]**

| | Capacity retention rate (%) | Resistance increase rate (%) |
|---|---|---|
| Reference Example 1B | 84 | 35 |
| Reference Example 2B | 84 | 34 |
| Reference Example 3B | 85 | 30 |

Referring to Table 5, it can be seen that the lithium secondary battery of Reference Example 1B had a lower effect despite using vinylethylene carbonate as an additive for the non-aqueous electrolyte compared to Reference Examples 2B and 3B. In other words, considering that Reference Examples 1B to 3B, in which a high nickel lithium transition metal oxide (LiNi_{0.6}Co_{0.2}Mn_{0.2}O₂) was used as the positive electrode active material, operated at a relatively low voltage (4.2 V) and vinylethylene carbonate was mainly decomposed at the negative electrode and formed a film, it can be seen that it is difficult to prevent electrolyte side reactions of the positive electrode even when vinylethylene carbonate is used as the non-aqueous electrolyte additive. In particular, the lithium secondary battery of Reference Example 1B had a low capacity retention rate and increased resistance compared to Reference Example 2B, in which vinylethylene carbonate was not used, and Reference Example 3B, in which vinylene carbonate was used instead of vinylethylene carbonate.

## Claims

1. A lithium secondary battery comprising:
a positive electrode;
a negative electrode;
a separator interposed between the positive electrode and the negative electrode; and
a non-aqueous electrolyte,
wherein the positive electrode includes a positive electrode active material,
the positive electrode active material includes a lithium transition metal oxide represented by Chemical Formula A below,
the non-aqueous electrolyte includes a lithium salt, an organic solvent, and an additive,
the additive includes a first additive, and
the first additive includes vinylethylene carbonate:
[Chemical Formula A] Li₁₊ₓ[NiₐCo_{b}Mn_{c}M¹_{d}]O_{2+w}
in Chemical Formula A, 0≤x≤0.5, a+b+c+d=1, 0.5≤a≤0.7, 0≤b≤0.15, c=1-a-b-d, 0≤d≤0.1, 0≤b/a≤0.2, 1≤a/c≤3, 0≤w≤1, and
M¹ is one or more selected from W, Cu, Fe, V, Cr, Ti, Zr, Zn, Al, In, Ta, Y, La, Sr, Ga, Sc, Gd, Sm, Ca, Ce, Nb, Mg, B, and Mo.

2. The lithium secondary battery of claim 1, wherein the first additive is included in the non-aqueous electrolyte in an amount of 0.1 wt% to 10 wt%.

3. The lithium secondary battery of claim 1, wherein the additive further includes a second additive, and the second additive includes at least one selected from the group consisting of a lithium salt-based additive, a nitrogen-containing heterocyclic compound-based additive, a cyclic sulfur compound-based additive, and a propargyl group-containing cyclic carbonate-based additive.

4. The lithium secondary battery of claim 3, wherein the lithium salt-based additive includes at least one selected from the group consisting of LiBF₄, LiBOB, LiODFB, LiDFP, and LiDFOP.

5. The lithium secondary battery of claim 3, wherein the nitrogen-containing heterocyclic compound-based additive includes at least one compound selected from the group consisting of compounds represented by Chemical Formula 1-1, Chemical Formula 1-2, and Chemical Formula 1-3: 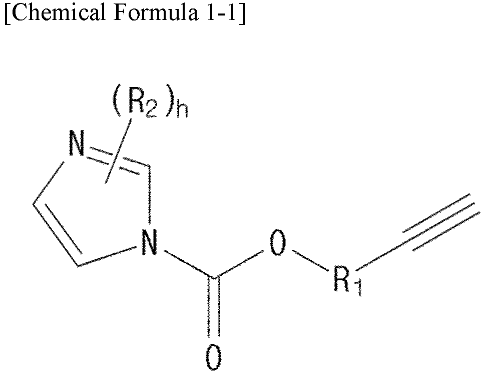 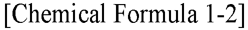 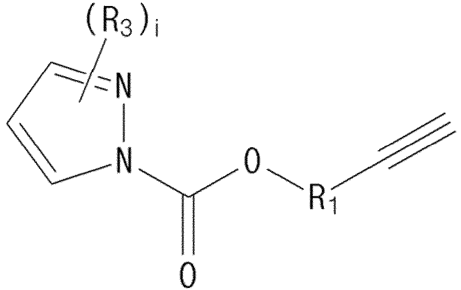 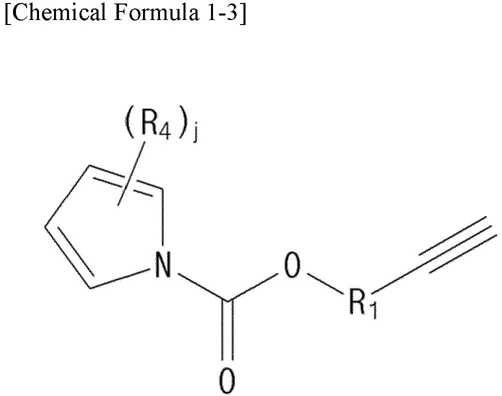 in Chemical Formula 1-1, Chemical Formula 1-2, and Chemical Formula 1-3, R₁ is a C₁ to C₃ alkylene group, R₂, R₃, and R₄ are independently selected from hydrogen, a C₁ to C₃ alkyl group, and -CN, h is an integer from 0 to 3, i is an integer from 0 to 3, and j is an integer from 0 to 4.

6. The lithium secondary battery of claim 3, wherein the nitrogen-containing heterocyclic compound-based additive includes a compound represented by Chemical Formula 1-1-A below:

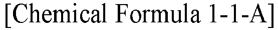

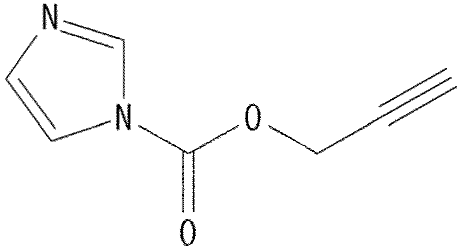

7. The lithium secondary battery of claim 3, wherein the cyclic sulfur compound-based additive includes at least one compound selected from the group consisting of compounds represented by Chemical Formula 2-1 to2-17:

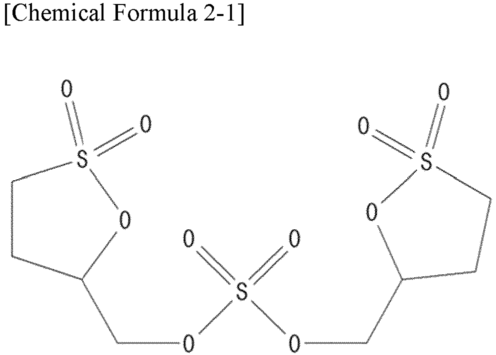

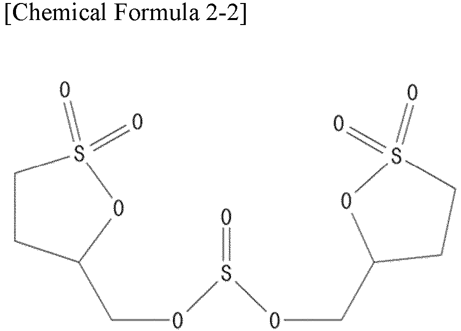

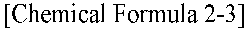

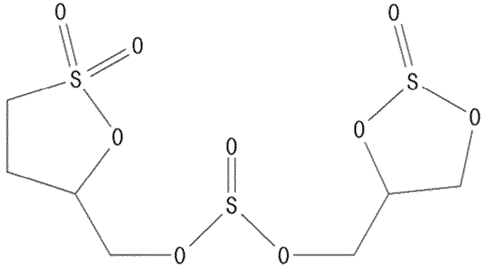

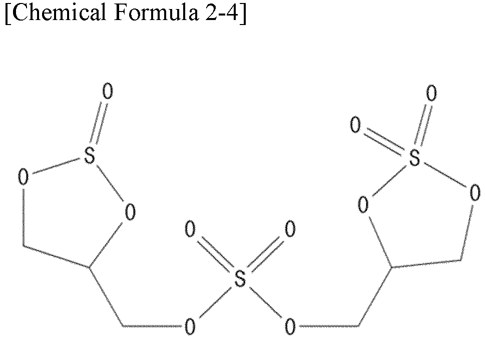

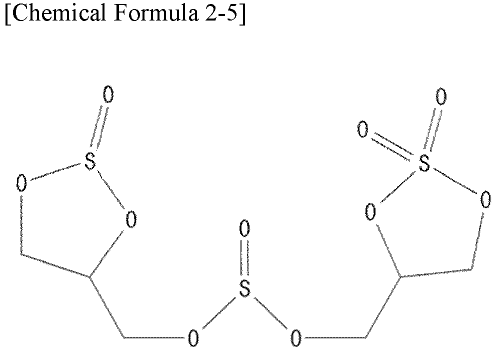

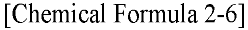

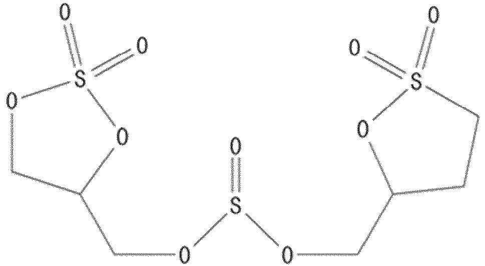

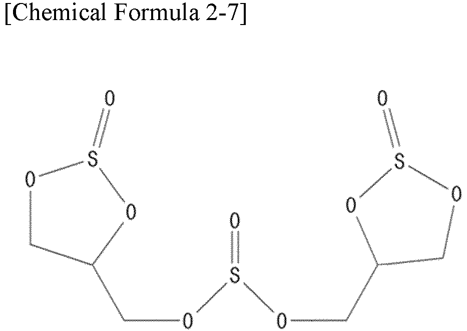

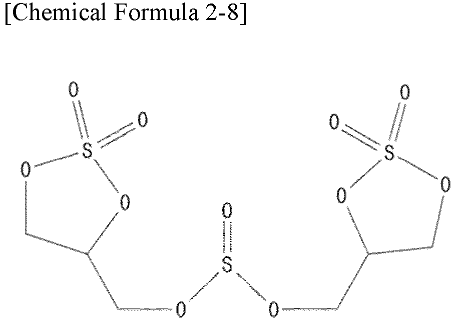

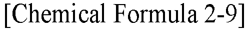

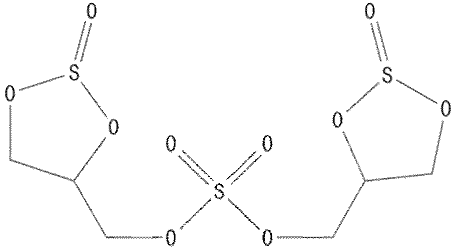

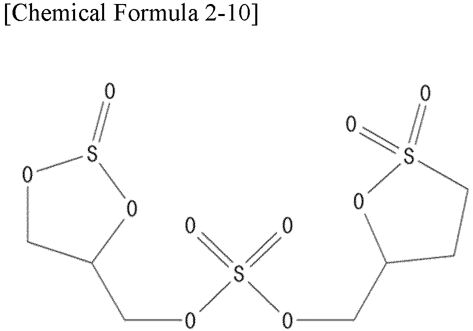

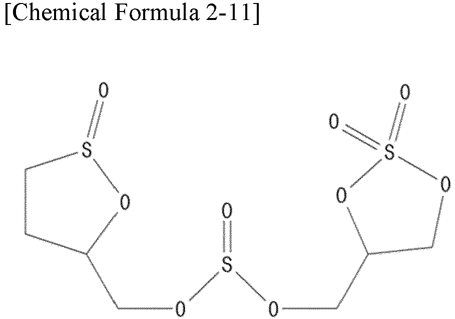

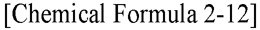

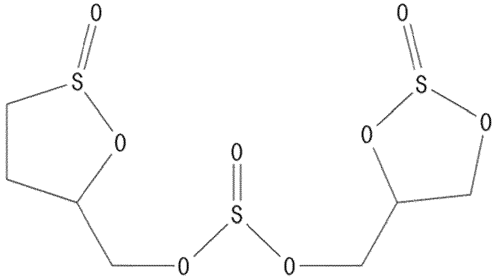

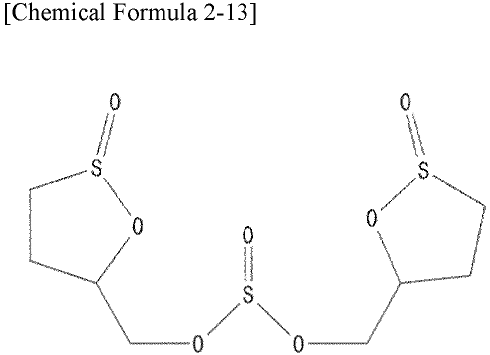

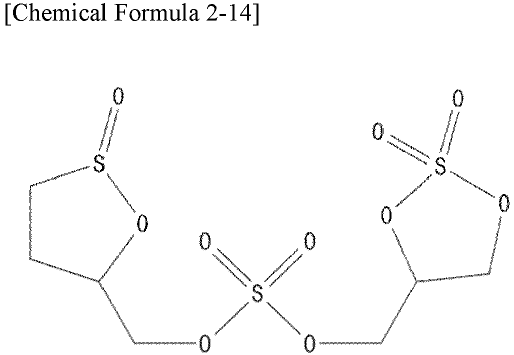

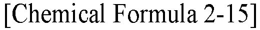

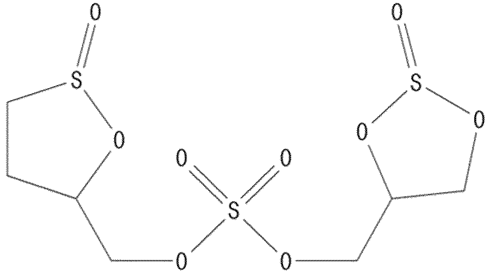

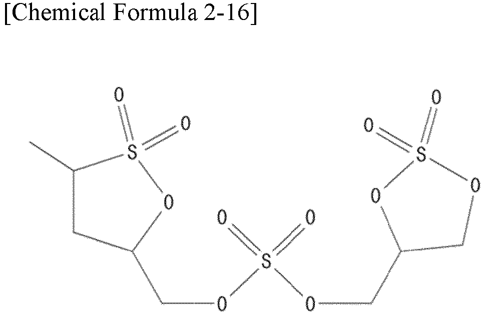

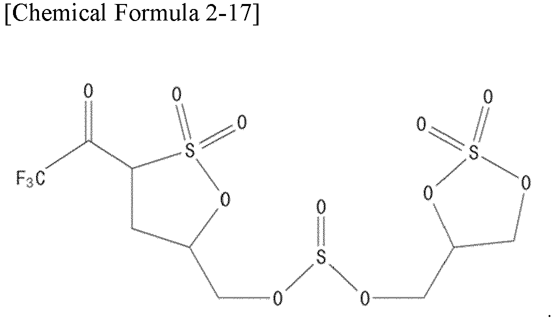

8. The lithium secondary battery of claim 3, wherein the propargyl group-containing cyclic carbonate-based additive includes a compound represented by Chemical Formula 3: 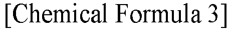 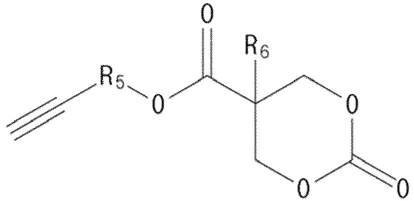 in Chemical Formula 3, R₅ is a C₁ to C₅ alkylene group, and R₆ is a C₁ to C₅ alkyl group.

9. The lithium secondary battery of claim 3, wherein the propargyl group-containing cyclic carbonate-based additive includes a compound represented by Chemical Formula 3-1:

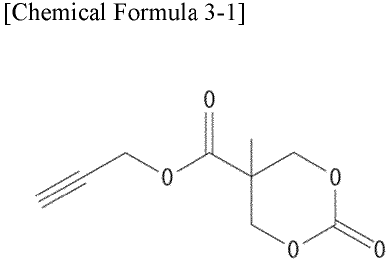

10. The lithium secondary battery of claim 3, wherein the second additive is included in the non-aqueous electrolyte in an amount of 0.1 wt% to 3 wt%.

11. The lithium secondary battery of claim1, wherein the lithium salt includes at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB(LiB(C₂O₄)₂), LiCF₃SO₃, LiFSI(LiN(SO₂F)₂), LiCH₃SO₃, LiCF₃CO₂, LiCH₃CO₂, and LiBETI(LiN(SO₂CF₂CF₃)₂).

12. The lithium secondary battery of claim 1, wherein the lithium salt is included in the non-aqueous electrolyte at a molar concentration of 0.5 M to5.0 M.

13. The lithium secondary battery of claim 1, wherein the organic solvent includes at least one selected from the group consisting of a cyclic carbonate-based organic solvent, a linear carbonate-based organic solvent, a linear ester-based organic solvent, and a cyclic ester-based organic solvent.

14. The lithium secondary battery of claim1, wherein the positive electrode active material is in the form of a single particle composed of one single nodule or a quasi-single particle, which is a complex of 30 or less nodules.

15. The lithium secondary battery of claim1, wherein in Chemical Formula A, a/(b×c) is18 to50.
